# FASCICULE DE BREVET EUROPEEN

(11) **EP 4 198 294 B1**
(45) Date de publication et mention de la délivrance du brevet: **28.08.2024**
(21) Numéro de dépôt: 22212356.4
(22) Date de dépôt: 08.12.2022
(51) Int. Cl.: F02K 1/60, F02K 1/70

(54) **INVERSEUR DE POUSSÉE À PORTE D'UNE NACELLE DE TURBORÉACTEUR D AÉRONEF À ORGANE DE DÉVIATION DES FLUIDES VERS L EXTÉRIEUR**
SCHUBUMKEHRVORRICHTUNG MIT EINER KLAPPE EINER FLUGZEUGTRIEBWERKSGONDEL MIT EINEM ELEMENT ZUR UMLENKUNG VON FLÜSSIGKEITEN NACH AUSSEN
THRUST REVERSER WITH A DOOR FOR AN AIRCRAFT TURBOJET ENGINE NACELLE, COMPRISING A MEMBER FOR DIVERTING FLUIDS TOWARDS THE OUTSIDE

(30) Priorité: 15.12.2021 FR 2113574
(43) Date de publication de la demande: 21.06.2023
(73) Titulaire: Safran Nacelles, 76700 Gonfreville-l'Orcher (FR)
(72) Inventeur: JORET, Jean-Phillipe, 77550 MOISSY-CRAMAYEL (FR); RABINEAU, Jérémie, 77550 MOISSY-CRAMAYEL (FR); LONCLE, Alexis Yves-marie, 77550 MOISSY-CRAMAYEL (FR); VALLEROY, Laurent Georges, 77550 MOISSY-CRAMAYEL (FR)
(74) Mandataire: Casalonga

(56) Documents cités:
- US-A- 5 039 171
- US-A- 5 970 704
- US-A1- 2002 184 874

## Description

### Domaine technique de l'invention

La présente invention concerne le domaine des aéronefs, et notamment des turbomachines d'aéronefs.

Plus particulièrement, l'invention concerne les inverseurs de poussée à porte pour turboréacteur.

### Etat de la technique antérieure

Un aéronef est propulsé par un ou plusieurs ensembles propulsifs comprenant chacun un turboréacteur logé dans une nacelle tubulaire. Chaque ensemble propulsif est rattaché à l'aéronef par un mât situé généralement sous ou sur une aile ou au niveau du fuselage de l'aéronef.

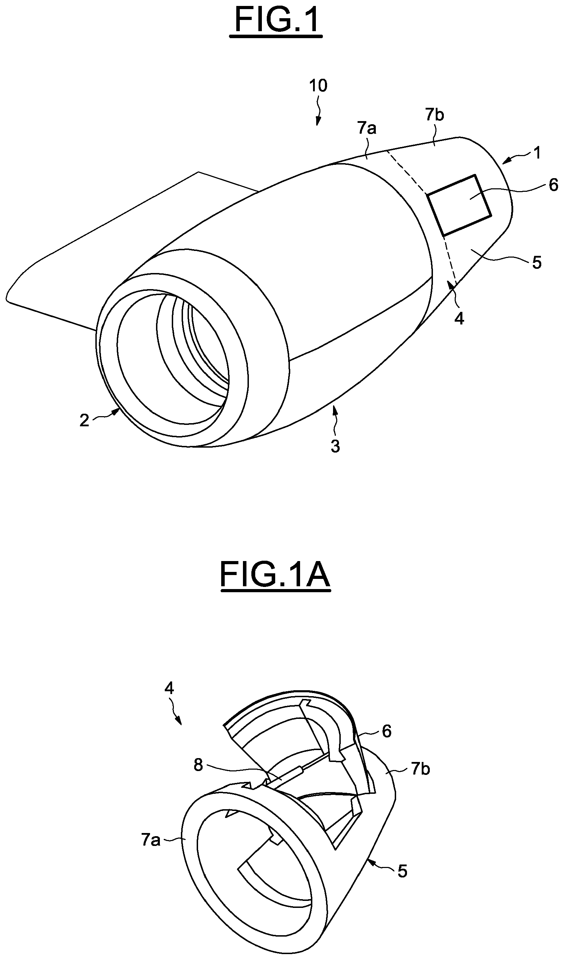

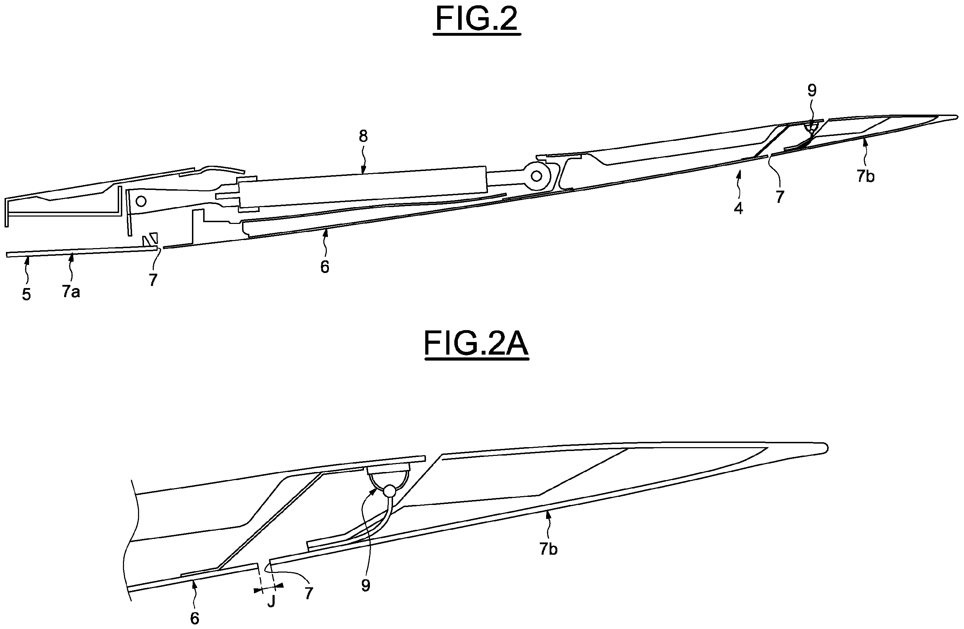

Tel qu'illustré sur les figures 1 et 2, une nacelle 1 présente généralement une structure tubulaire comprenant une entrée d'air 2 en amont du turboréacteur, une section médiane 3 destinée à entourer une soufflante du turboréacteur, une section aval 4 pouvant abriter des moyens d'inversion de poussée et destinée à entourer la chambre de combustion du turboréacteur. La nacelle 1 est généralement terminée par une tuyère d'éjection (non visible) dont la sortie est située en aval du turboréacteur.

Les moyens d'inversion de poussée sont, lors de l'atterrissage de l'aéronef, destinés à améliorer la capacité de freinage de celui-ci en redirigeant vers l'avant au moins une partie de la poussée générée par le turboréacteur. Ces moyens comprennent un inverseur de poussée comprenant un ou plusieurs éléments mobiles d'inversion de poussée portés par la nacelle pour se déplacer entre une position fermée dans laquelle l'inverseur de poussée est inactif et une position ouverte dans laquelle l'inverseur de poussée est actif, c'est-à-dire qu'il renvoie au moins une partie du flux de gaz généré par le turboréacteur dans la direction inverse au flux guidé par la nacelle. Dans la position ouverte, le flux d'air circulant peut être dévié vers l'extérieur et vers l'amont de l'inverseur, de sorte à exercer une contre poussée contribuant au freinage de l'aéronef.

La section aval 4 de la nacelle 1 comprend donc une structure fixe 5 et une structure mobile 6.

Les éléments mobiles 6 des inverseurs de poussée peuvent être des portes.

La structure fixe 5 comprend ainsi un ou plusieurs logements 7 de réception d'une porte 6 chacun délimité axialement par un cadre amont 7a et un cadre aval 7b et transversalement par deux poutres latérales (non visibles sur les figures).

L'actionnement des portes 6 d'inverseurs de poussée est généralement réalisé grâce à des actionneurs 8, visibles sur la figure 2, fixés sur la structure fixe 5, notamment dans le cadre amont 7a, et reliés d'une part à un moteur (non représenté), et d'autre part à la porte correspondante 6 pour manoeuvrer celle-ci dans un sens de rétraction ou de déploiement sur une course des actionneurs comprise entre la position fermée, visible sur la figure 1, et la position ouverte, visible sur la figure 1A de la porte 6. Dans la position ouverte, la porte 6 est basculée grâce à l'actionneur 8 autour d'un axe de rotation (non représenté) entre ladite porte 6 et la structure fixe 5, notamment le cadre aval 7b.

Il existe des jeux nécessaires au déplacement de la porte de la position fermée à la position ouverte et vice versa. Ces jeux sont présents tout autour de la porte, notamment le jeu axial J, entre la porte et le cadre aval 7b, visible sur la figure 2A.

Tel qu'illustré sur les figures 2 et 2A, un joint circonférentiel 9 est monté sur la porte 6, notamment sur l'intégralité de l'étendue circonférentielle de ladite porte. Il existe également des joints circonférentiels portés par le cadre aval 7b ou encore des joints circonférentiels s'étendant sur l'étendue de la porte 6 en regard du cadre aval 7b.

Toutefois, en cas de fuite d'un tuyau dans le turboréacteur, des fluides issus de la zone du turboréacteur, notamment entre le capot du turboréacteur et le carter moteur, sont évacués vers l'extérieur de la nacelle par le biais de trous de drainage (non représentés). Lors du mouvement de l'aéronef, ces fluides de fuite longent le capot 3 du turboréacteur ainsi que la section aval 4, c'est-à-dire l'inverseur de poussée. Les fluides de fuite longent la porte 6 et s'insèrent dans le jeu présent entre ladite porte et le cadre aval 7b de la structure fixe 5 pour remonter le long des poutres latérales vers le cadre amont 7a. Or, la zone située sous le cadre amont 7a comprend des équipements qui ne sont pas dimensionnés au contact avec ce type de fluide, au risque d'être endommagé, voire de générer un départ d'incendie.

Le joint circonférentiel 9 n'est pas suffisant pour garantir l'étanchéité de la zone située sous le cadre amont 7a.

Il existe un besoin de réduire, voire d'éliminer le passage d'un fluide de fuite entre la porte et la structure fixe d'un inverseur de poussée d'une nacelle d'un turboréacteur.

L'arrière-plan technique comprend notamment les documents US5039171 et US2002/184874.

### Exposé de l'invention

La présente invention a donc pour but de pallier les inconvénients précités.

L'objectif de l'invention est d'éviter le passage de fluides externes par le jeu axial entre la porte et la structure fixe, notamment le cadre aval d'un inverseur de poussée afin d'éviter toute contamination des poutres latérales et la zone située sous le cadre amont de la structure fixe.

L'invention a pour objet un inverseur de poussée d'une nacelle de turboréacteur d'aéronef s'étendant autour d'un axe longitudinal et comprenant une structure fixe et au moins une porte mobile en rotation entre une position fermée dans laquelle ladite porte assure une continuité aérodynamique avec la structure fixe pour la circulation d'un flux d'air et une position ouverte dans laquelle le flux d'air circulant est dévié vers l'extérieur et vers l'amont de l'inverseur de poussée.

La structure fixe comprend un cadre aval espacé axialement d'un bord d'extrémité aval de la porte par un jeu axial parallèle à l'axe longitudinal.

L'inverseur de poussée comprend un organe de déviation des fluides vers l'extérieur de l'inverseur de poussée comprenant au moins une partie en saillie ou déflecteur fixée sur l'une de la porte ou l'autre de la structure fixe et s'étendant dans le jeu axial et vers l'une de la structure fixe ou l'autre de la porte, tout en laissant subsister un espace axial entre une extrémité libre de ladite partie en saillie et l'une de la structure fixe ou l'autre de la porte.

La partie en saillie s'étend localement dans le jeu axial. En d'autres termes, la partie en saillie ne s'étend pas sur toute la circonférence du bord d'extrémité de la porte ou de l'extrémité amont du cadre aval de la structure fixe.

Par « localement », on entend une partie en saillie ne s'étendant pas sur toute la circonférence de l'extrémité amont du cadre aval de la structure fixe.

La partie en saillie s'étend par exemple sur une zone de la circonférence de l'extrémité amont du cadre aval de la structure fixe inférieure à la moitié de la circonférence totale de ladite extrémité, de préférence sur une zone inférieure à un huitième de la circonférence totale de ladite extrémité.

La partie en saillie s'étend sur une zone d'étendue comprise entre 5cm et 10cm selon la direction circonférentielle, au maximum sur une zone d'étendue égale à 5cm.

En d'autres termes, lorsque la partie en saillie est portée par la porte, son extrémité libre n'est pas en contact avec la structure fixe, notamment l'extrémité amont du cadre aval, et lorsque la partie en saillie est portée par la structure fixe, son extrémité libre n'est pas en contact avec la porte.

La partie en saillie forme un groupe déflecteur. L'organe de déviation des fluides associé à la porte peut comprend un ou plusieurs groupes déflecteurs espacés circonférentiellement l'un de l'autre.

La partie en saillie agit comme une barrière locale, ponctuelle, contre les fluides externes circulant sur la surface extérieure de l'inverseur de poussée et est configurée pour modifier le sens d'écoulement d'un flux de fluides externes à l'inverseur de poussée. Ainsi, les fluides externes peuvent être redirigés vers l'extérieur de l'inverseur de poussée pour longer le cadre aval de la structure fixe.

L'espace axial est plus petit que le jeu axial.

L'organe de déviation des fluides est associé à la porte.

La partie en saillie ou déflecteur s'étend dans le jeu axial entre la structure fixe et la porte et ne dépasse pas radialement à l'extérieur de la structure fixe, de sorte que ladite partie en saillie n'est pas disposée dans le flux de circulation des fluides externes.

Le cadre aval comprend une extrémité amont espacée axialement du bord d'extrémité aval de la porte par le jeu axial.

Avantageusement, l'organe de déviation des fluides vers l'extérieur de l'inverseur de poussée comprend au moins une première partie en saillie ou déflecteur fixée sur la porte, notamment le bord d'extrémité aval, et s'étendant localement dans le jeu axial et vers la structure fixe, notamment l'extrémité amont du cadre aval, et au moins une deuxième partie en saillie ou déflecteur fixée sur la structure fixe, notamment l'extrémité amont du cadre aval, et s'étendant localement dans le jeu axial et vers la porte notamment le bord d'extrémité aval.

La première partie et la deuxième partie forment ensemble le groupe déflecteur.

La première partie portée par la porte n'est pas en contact avec le cadre aval de la structure fixe et la deuxième partie portée par ledit cadre aval n'est pas en contact avec le bord d'extrémité de la porte.

Ainsi, la première et la deuxième parties de l'organe de déviation des fluides forment une barrière locale permettant aux fluides externes d'être redirigés vers l'extérieur de l'inverseur de poussée pour longer le cadre aval de la structure fixe.

La première partie en saillie et la deuxième partie en saillie s'étendent chacune localement dans le jeu axial. En d'autres termes, la première partie en saillie fixée sur la porte ne s'étend pas sur toute la circonférence du bord d'extrémité de la porte et la deuxième partie en saillie fixée à la structure fixe ne s'étend pas sur toute la circonférence de l'extrémité amont du cadre aval de la structure fixe.

Selon un mode de réalisation, la première partie en saillie et la deuxième partie en saillie de l'organe de déviation des fluides externes sont en contact local et direct radial et/ ou circonférentiel l'une avec l'autre.

En d'autres termes, la première partie est en appui direct radial et/ou circonférentiel sur la deuxième partie. Le contact direct, c'est-à-dire sans élément intermédiaire, entre les deux parties de l'organe de déviation des flux permet d'améliorer la déviation des fluides externes.

Par exemple, l'une de la première partie ou l'autre de la deuxième partie est réalisée en matériau élastique capable d'être déformé élastiquement lors d'une sollicitation externe et de reprendre sa forme initiale après l'arrêt de la sollicitation externe.

En d'autres termes, soit la première partie portée par la porte est réalisée en matériau élastique et la deuxième partie portée par la structure fixe est réalisée en matériau plus rigide que la première partie, soit la deuxième partie portée par la structure fixe est réalisée en matériau élastique et la première partie portée par la porte est réalisée en plus rigide que la deuxième partie.

La partie en saillie réalisée en matériau plus rigide que l'autre partie peut être normale ou parallèle à la surface de fixation. La partie en saillie réalisée en matériau plus souple vient alors s'écraser sur ladite partie plus rigide.

Par exemple, lorsque la première partie est en appui radial et/ou circonférentiel sur la deuxième partie, la partie de déviation de la première partie en saillie est sensiblement inclinée selon un angle compris entre 90° et 180° par rapport à la partie de fixation.

Selon un mode de réalisation, l'une de la première partie ou l'autre de la deuxième partie est un joint réalisé en matériau plus souple que l'une de la deuxième partie ou l'autre de la première partie.

La partie plus souple peut être réalisée en matériau polymère, tel que par exemple du silicone. En variante, on pourrait prévoir que la partie plus souple soit réalisée sous la forme d'une lame à ressort métallique.

La partie plus rigide peut être réalisée en matériau rigide, tel qu'un matériau métallique, en matériau composite, en matériau plastique. Par « rigide », on entend un matériau non déformable élastiquement sous l'action d'une sollicitation exercée.

En variante, la première partie et la deuxième partie peuvent chacune être réalisées en matériau élastique capable d'être déformé élastiquement lors d'une sollicitation externe et de reprendre sa forme initiale après l'arrêt de la sollicitation externe.

Selon un autre mode de réalisation, la première partie en saillie et la deuxième partie en saillie sont circonférentiellement espacées l'une de l'autre d'un jeu circonférentiel.

En d'autres termes, la première et la deuxième partie de l'organe de déviation des fluides sont décalées angulairement et ne sont pas en contacts l'une avec l'autre. Le jeu circonférentiel permet de prendre en compte les tolérances de fabrication et d'installation de la porte et de la structure fixe, ainsi que des déplacements lors du vol de l'aéronef.

Avantageusement, la première partie en saillie comprend une partie de fixation fixée sur le bord d'extrémité aval de la porte et une partie de déviation s'étendant depuis une surface externe de la partie de fixation vers l'extérieur.

Par exemple, lorsque la première partie en saillie et la deuxième partie en saillie sont circonférentiellement espacées l'une de l'autre d'un jeu circonférentiel, la partie de déviation de la première partie en saillie est sensiblement inclinée selon un angle compris entre 90° et 150°, par exemple égal à 135° par rapport à la partie de fixation.

Avantageusement, la deuxième partie en saillie comprend une partie de fixation fixée sur l'extrémité amont du cadre aval de la structure fixe et une partie de déviation s'étendant depuis une surface externe de la partie de fixation vers l'extérieur.

Par exemple, la partie de déviation de la deuxième partie en saillie est inclinée selon un angle compris entre 90° et 150°, par exemple égal à 90° par rapport à la partie de fixation.

Selon un mode de réalisation, le groupe déflecteur de l'organe de déviation des fluides associé à la porte comprend un nombre de premières parties en saillie supérieur ou égal à deux et un nombre de deuxièmes parties en saillie supérieur ou égal à deux, le nombre de premières parties en saillie étant égal ou différent du nombre de deuxièmes parties en saillie.

Dans le cas d'une pluralité de premières et deuxièmes parties, les premières et les deuxièmes parties peuvent être alternées. Il est également possible de prévoir une succession de premières parties sans alternance avec des deuxièmes parties.

Par exemple, chacune des premières et deuxièmes parties de l'organe de déviation des fluides externes est réalisée en matériau rigide, tel qu'un matériau métallique, en matériau composite, en matériau plastique.

Selon un mode de réalisation, l'organe de déviation des fluides comprend au moins deux groupes déflecteur espacés circonférentiellement l'un de l'autre.

Selon un mode de réalisation, l'inverseur de poussée comprend un premier organe de déviation des fluides associé à la porte et comprenant au moins un premier groupe déflecteur comprenant la première partie en saillie et la deuxième partie en saillie circonférentiellement espacée de la première partie en saillie d'un jeu circonférentiel et un deuxième organe de déviation des fluides associé à ladite porte (et comprenant au moins un deuxième groupe déflecteur comprenant la première partie en saillie et la deuxième partie en saillie en contact local direct radial et/ou circonférentiel avec la première partie en saillie .

Selon un mode de réalisation, l'inverseur de poussée comprend un joint circonférentiel fixé sur la porte et distinct de l'organe de déviation des fluides.

Par « rigide », on entend un matériau non déformable élastiquement sous l'action d'une sollicitation exercée.

Selon un autre aspect, l'invention concerne une nacelle de turboréacteur d'aéronef comprenant un inverseur de poussée à porte tel que décrit précédemment.

### Brève description des dessins

D'autres buts, caractéristiques et avantages de l'invention apparaîtront à la lecture de la description suivante, donnée uniquement à titre d'exemple non limitatif, et faite en référence aux dessins indexés sur lesquels :
D'autres buts, caractéristiques et avantages de l'invention apparaîtront à la lecture de la description suivante, donnée uniquement à titre d'exemple non limitatif, et faite en référence aux dessins indexés sur lesquels :
[Fig 1] est une vue schématique d'une nacelle pour un turboréacteur d'aéronef comprenant un inverseur de poussée à porte en position fermée selon l'art antérieur ;
[Fig 1A] est une vue de détails de la figure 1, dans laquelle l'inverseur de poussée à porte est en position ouverte ;
[Fig 2] est une vue de détails en coupe de la nacelle de la figure 1 ;
[Fig 2A] est une vue de détails de la figure 2 ;
[Fig 3] est une vue schématique d'un inverseur de poussée à porte d'une nacelle de turboréacteur d'aéronef selon l'invention ;
[Fig 4]
[Fig 5]

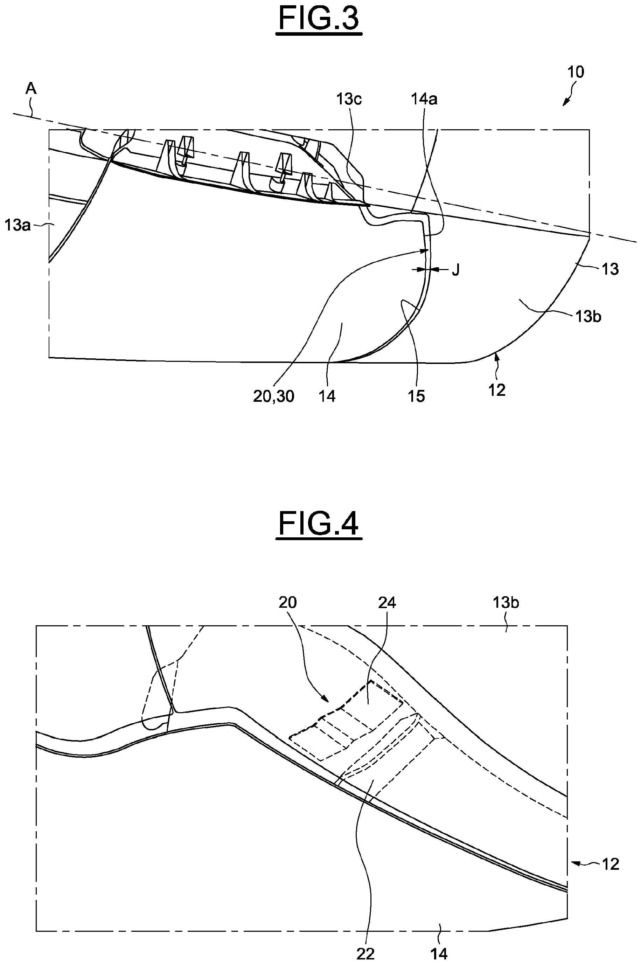

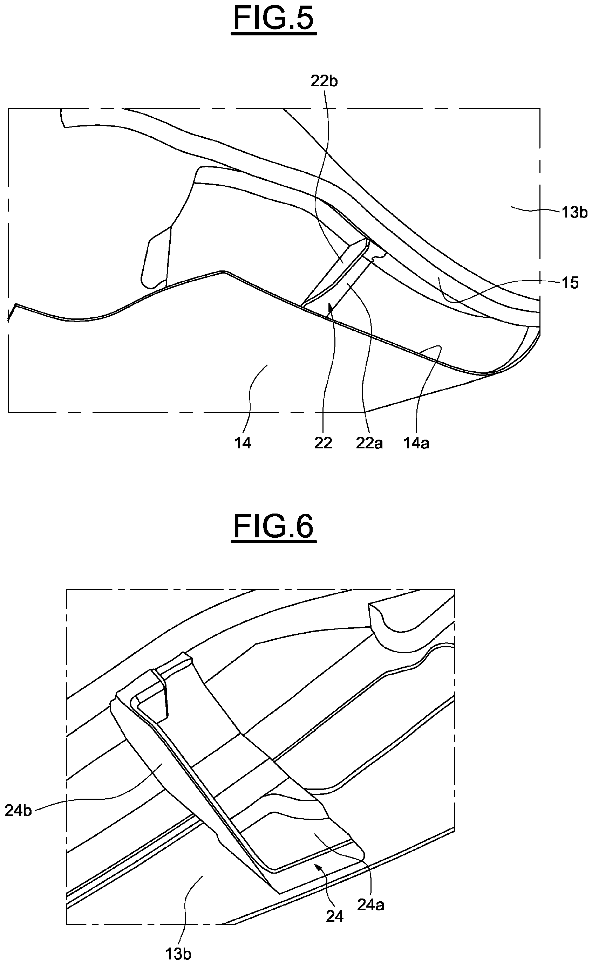

[Fig 6] sont des vues de détails d'un organe de déviation des fluides de l'inverseur de poussée de la figure 3 selon un mode de réalisation de l'invention ;
[Fig 7]
   et

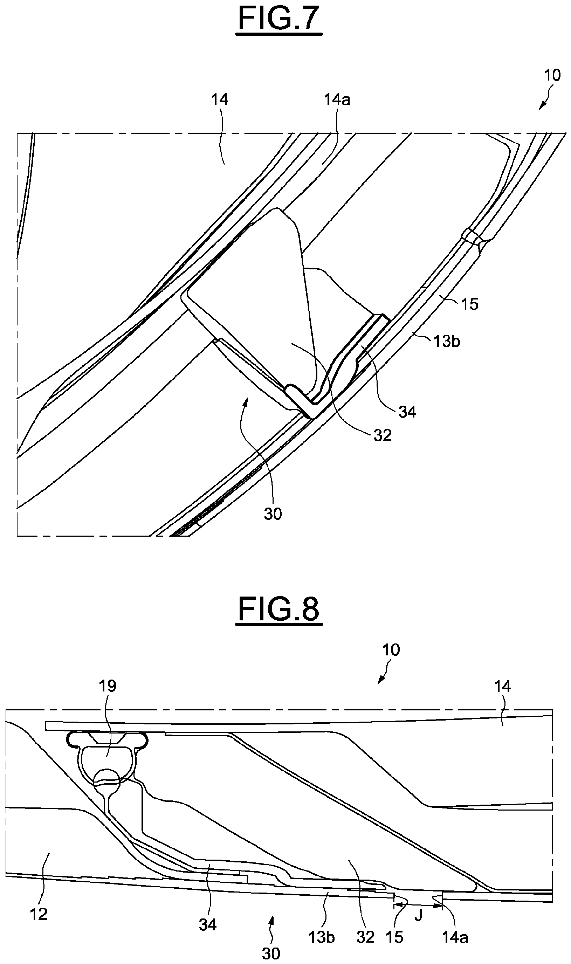

[Fig 8] sont des vues de détails d'un organe de déviation des fluides de l'inverseur de poussée de la figure 3 selon un autre mode de réalisation de l'invention.

### Exposé détaillé d'au moins un mode de réalisation

Dans la suite de la description, les termes « amont » et « aval » sont définis par rapport au sens de circulation de l'air dans la turbomachine.

Les termes « axial » et « radial » sont définis par rapport à un axe d'extension longitudinal A de l'inverseur de poussée 10.

Sur la figure 3 est représenté très schématiquement un inverseur de poussée 10 à porte d'une nacelle de turboréacteur d'aéronef (non représentée).

L'inverseur de poussée 10 s'étend selon un axe longitudinal A correspondant à un axe longitudinal de la nacelle (non représentée). L'inverseur de poussée 10 correspond à la section aval de la nacelle.

L'inverseur de poussée 10 comprend une structure fixe 12 et une porte 14 mobile en rotation autour d'un axe transversal à l'axe longitudinal, entre une position fermée, visible sur la figure 3, dans laquelle elle assure une continuité aérodynamique avec la structure fixe 12 de l'inverseur et avec la nacelle et une position ouverte (non visible), dans laquelle la porte 14 permet la déviation du flux d'air vers l'extérieur et vers l'amont de l'inverseur 10.

La porte 14 est montée pivotante autour d'un axe sous l'action d'un actionneur. L'actionnement de la porte est connu et ne sera pas davantage décrit.

La structure fixe 12 comprend ici un logement 13 de réception de la porte 14 délimité axialement par un cadre amont 13a et un cadre aval 13b et transversalement par deux poutres latérales 13c dont une seule est visible sur la figure 3. En variante, on pourrait prévoir que la structure fixe 12 comprenne un nombre différent de logements de réception de la porte, par exemple supérieur ou égal à deux.

Le cadre aval 13b espacé axialement d'un bord d'extrémité aval de la porte 14 par un jeu axial J.

L'inverseur de poussée 10 comprend en outre un organe 20 de déviation des fluides vers l'extérieur de l'inverseur de poussée 10.

Un exemple de l'organe 20 de déviation des fluides est illustré en détails sur les figures 4 à 6. Dans cet exemple, l'organe 20 de déviation des fluides comprend une première partie 22 solidaire de la porte 14 et s'étendant axialement dans le jeu axial J et vers le cadre aval 13b de la structure fixe 12 de l'inverseur de poussée 10.

Un espace axial (non référencé) subsiste entre une extrémité libre de ladite première partie 22 et une extrémité amont 15 du cadre aval 13b de la structure fixe 12. L'espace axial est plus petit que le jeu axial.

Tel qu'illustré sur la figure 5, la première partie 22 comprend une partie de fixation 22a fixée sur le bord d'extrémité aval 14a de ladite porte et une partie de déviation 22b s'étendant depuis une surface externe de la partie de fixation 22a vers l'extérieur. La partie de déviation 22b est ici sensiblement inclinée selon un angle compris entre 90° et 150°, par exemple égal à 135° par rapport à la partie de fixation 22a.

L'organe 20 de déviation des fluides comprend en outre une deuxième partie 24 solidaire de la structure fixe 12 et s'étendant axialement dans le jeu axial J depuis l'extrémité amont 15 du cadre aval 13b et vers le bord d'extrémité aval 14a de la porte 14 de l'inverseur de poussée 10.

Un espace axial (non référencé) subsiste entre une extrémité libre de ladite deuxième partie 24 et le bord d'extrémité aval 14a de la porte 14. L'espace axial est plus petit que le jeu axial.

Tel qu'illustré sur la figure 6, la deuxième partie 24 comprend une partie de fixation 24a fixée sur l'extrémité amont 15 du cadre aval 13b de la structure fixe 12 et une partie de déviation 24b s'étendant depuis une surface externe de la partie de fixation 24a vers l'extérieur. La partie de déviation 24b est ici inclinée selon un angle compris entre 90° et 150°, par exemple égal à 90° par rapport à la partie de fixation 24a.

Les première et deuxièmes parties 22, 24 sont des déflecteurs configurés pour modifier le sens d'écoulement d'un flux de fluides externes à l'inverseur de poussée.

La première partie 22 portée par la porte 14 n'est pas en contact avec le cadre aval 13b de la structure fixe 12 et la deuxième partie 24 portée par ledit cadre aval 13b n'est pas en contact avec le bord d'extrémité 14a de la porte 14.

La première et la deuxième parties 22, 24 sont ici circonférentiellement espacées l'une de l'autre d'un jeu circonférentiel.

En d'autres termes, la première et la deuxième parties 22, 24 de l'organe 20 de déviation des fluides ne sont pas en contacts l'une avec l'autre. Le jeu circonférentiel permet de prendre en compte les tolérances de fabrication et d'installation de la porte et de la structure fixe, ainsi que des déplacements lors du vol de l'aéronef.

La première et la deuxième parties en saillie 22, 24 de l'organe 20 de déviation des fluides s'étendent chacune localement dans le jeu axial J. En d'autres termes, la première partie en saillie 22 fixée sur la porte ne s'étend pas sur toute la circonférence du bord d'extrémité 14a de la porte 14 et la deuxième partie en saillie 24 fixée à la structure fixe ne s'étend pas sur toute la circonférence de l'extrémité amont 15 du cadre aval 13b de la structure fixe 12.

Ainsi, la première et la deuxième parties 22, 24 de l'organe 20 de déviation des fluides forment une barrière locale permettant aux fluides externes d'être redirigés vers l'extérieur de l'inverseur de poussée 10 pour longer le cadre aval 13b de la structure fixe 12.

Tel qu'illustré, l'organe 20 de déviation des fluides comprend une première partie 22 et une deuxième partie 24, formant un groupe déflecteur. En variante, on pourrait prévoir un nombre différent de première et de deuxième parties 22, 24 de l'organe de déviation des fluides. On pourrait également prévoir que le nombre de premières parties 22 soit différent du nombre de deuxièmes parties 24. Dans le cas d'une pluralité de premières et deuxièmes parties, les premières et les deuxièmes parties peuvent être alternées. Il est également possible de prévoir une succession de premières parties sans alternance avec des deuxièmes parties.

On pourrait également prévoir que l'organe 20 de déviation des fluides comprenne une pluralité de groupes déflecteur espacés circonférentiellement l'un de l'autre.

On pourrait également prévoir que l'organe 20 de déviation des fluides comprenne qu'une seule partie en saillie formant un groupe déflecteur et s'étendant dans le jeu axial depuis l'une de la porte 14 ou l'autre de la structure fixe 12 vers l'autre de la structure fixe 12 ou l'une de la porte 14.

Les première partie 22 et deuxième partie 24 peuvent être réalisées en matériau rigide, tel qu'un matériau métallique, en matériau composite, en matériau plastique. Par « rigide », on entend un matériau non déformable élastiquement sous l'action d'une sollicitation exercée.

Le mode de réalisation illustré sur les figures 7 et 8 dans lequel les mêmes éléments portent les mêmes références, diffère du mode de réalisation illustré sur les figures 4 à 6 uniquement par l'organe de déviation de fluides externes.

Tel qu'illustré en détails sur les figures 7 et 8, l'organe 30 de déviation des fluides comprend une première partie 32 solidaire de la porte 14 et s'étendant axialement localement dans le jeu axial J et vers le cadre aval 13b de la structure fixe 12 de l'inverseur de poussée 10.

Un espace axial (non référencé) subsiste entre une extrémité libre de ladite première partie 32 et le cadre aval 13b de la structure fixe 12. L'espace axial est plus petit que le jeu axial.

Tel qu'illustré, la première partie en saillie 32 est fixée sur le bord d'extrémité aval 14a de ladite porte 14.

L'organe 30 de déviation des fluides comprend en outre une deuxième partie 34 solidaire de la structure fixe 12, notamment fixée sur l'extrémité amont 15 du cadre aval 13b de la structure fixe 12 et s'étendant axialement localement dans le jeu axial J et vers le bord d'extrémité aval 14a de la porte 14 de l'inverseur de poussée 10.

Un espace axial (non référencé) subsiste entre une extrémité libre de ladite deuxième partie 34 et le bord d'extrémité aval 14a de la porte 14. L'espace axial est plus petit que le jeu axial.

Tel qu'illustré, la première et la deuxième parties en saillie 32, 34 sont en contact radial ponctuel et direct l'une avec l'autre, formant un joint local entre la porte 14 et le cadre aval 13b. En d'autres termes, la première partie 32 est en appui radial sur la deuxième partie 34. Les contacts entre la première partie 32 et la deuxième partie 34 sont visibles en détails sur la figure 8. Ainsi, on observe que la première partie 32 et la deuxième partie 34 sont en contact le long de deux zones de contacts (non référencées).

En d'autres termes, la première partie en saillie 32 fixée sur la porte 14 ne s'étend pas sur toute la circonférence du bord d'extrémité 14a de la porte 14 et la deuxième partie en saillie 34 fixée à la structure fixe 12 ne s'étend pas sur toute la circonférence de l'extrémité amont 15 du cadre aval 13b de la structure fixe 12.

Par « contact direct », on entend un contact sans élément intermédiaire entre deux éléments.

Ainsi, la première et la deuxième parties en saillie 32, 34 de l'organe 30 de déviation des fluides forment une barrière locale et ponctuelle permettant aux fluides externes d'être redirigés vers l'extérieur de l'inverseur de poussée 10 pour longer le cadre aval 13b de la structure fixe 12.

Dans cet exemple, les première et deuxièmes parties en saillie 32, 34 sont également des déflecteurs configurés pour modifier le sens d'écoulement d'un flux de fluides externes à l'inverseur de poussée.

En variante, on pourrait prévoir que la première et la deuxième parties en saillie 32, 34 soient en contact circonférentiel l'une avec l'autre, voire que première et la deuxième parties en saillie 32, 34 soient en contact circonférentiel et radial l'une avec l'autre.

La première partie 32 peut être un joint réalisé en matériau plus flexible que la deuxième partie 34. Par exemple, la première partie 32 est réalisée en matériau polymère, tel que par exemple du silicone. En variante, on pourrait prévoir que la première partie 32 soit réalisée sous la forme d'une lame à ressort métallique. De manière générale, la première partie 32 est réalisée en matériau élastique capable d'être déformé élastiquement lors d'une sollicitation externe et de reprendre sa forme initiale après l'arrêt de la sollicitation externe.

La deuxième partie 34 peut être réalisée en matériau rigide, tel qu'un matériau métallique, en matériau composite, en matériau plastique. Par « rigide », on entend un matériau non déformable élastiquement sous l'action d'une sollicitation exercée.

En variante, la première partie 32 portée par la porte 14 pourrait être plus rigide que la deuxième partie 34 portée par la structure fixe 12.

En variante, la première partie 32 et la deuxième partie 34 peuvent chacune être réalisées en matériau élastique capable d'être déformé élastiquement lors d'une sollicitation externe et de reprendre sa forme initiale après l'arrêt de la sollicitation externe.

Tel qu'illustré, l'organe 30 de déviation des fluides comprend une première partie 32 et une deuxième partie 34 formant ensemble un groupe déflecteur. En variante, on pourrait prévoir un nombre différent de première et de deuxième parties 32, 34 de l'organe de déviation des fluides. Chaque groupe déflecteur comprenant une première et une deuxième partie sont espacés circonférentiellement l'un de l'autre.

On pourrait également prévoir de combiner un premier organe 20 de déviation des fluides décrit en référence aux figures 4 à 6 avec un deuxième organe 30 de déviation des fluides décrit en référence aux figures 7 et 8, le premier organe 20 et le deuxième organe 30 étant espacés circonférentiellement l'un de l'autre.

De manière nullement limitative, l'inverseur de poussée 10 comprend en outre un joint circonférentiel 19 visible sur la figure 8 s'étendant circonférentiellement sur le pourtour de la porte 14. Le joint circonférentiel 19 est distinct des organes 20, 30 de déviation des fluides.

Dans l'ensemble des modes de réalisation décrits, l'organe de déviation des fluides 20, 30 est avantageusement disposé dans le jeu axial entre la porte 14 et la structure fixe 12 le plus proche du pylône ou fuselage de l'aéronef sur lequel est destiné à être monté l'inverseur de poussée 10.

Grâce à l'invention, il est possible de dévier efficacement les fluides externes circulant autour de la porte vers l'extérieur de l'inverseur de poussée et ainsi d'éviter que ces fluides externes ne s'insèrent dans le jeu présent entre le bord d'extrémité aval de la porte et le cadre aval de la structure fixe de l'inverseur de poussée.

## Revendications

1. Inverseur de poussée (10) d'une nacelle de turboréacteur d'aéronef s'étendant autour d'un axe longitudinal (A) et comprenant une structure fixe (12) et au moins une porte (14) mobile en rotation entre une position fermée dans laquelle ladite porte (14) assure une continuité aérodynamique avec la structure fixe (12) pour la circulation d'un flux d'air et une position ouverte dans laquelle le flux d'air circulant est dévié vers l'extérieur et vers l'amont de l'inverseur de poussée (10), la structure fixe (12) comprenant un cadre aval (13b) comprenant une extrémité amont (15) espacée axialement d'un bord d'extrémité aval (14a) de la porte (14) par un jeu axial (J) parallèle à l'axe longitudinal (A), l'inverseur de poussée comprenant au moins un organe (20 ; 30) de déviation des fluides vers l'extérieur de l'inverseur de poussée (10) associé à la porte (14) **caractérisé en ce que** l'organe (20 ; 30) de déviation des fluides comprend au moins un groupe déflecteur comprenant au moins une partie en saillie (22, 24 ; 32, 34) fixée sur l'une de la porte (14) ou l'autre de la structure fixe (12) et s'étendant localement depuis l'une du bord d'extrémité aval (14a) de la porte (14) ou l'autre de l'extrémité amont (15) du cadre aval (13b) dans le jeu axial (J) et vers l'une de l'extrémité amont (15) du cadre aval (13b) ou l'autre du bord d'extrémité aval (14a) de la porte (14), tout en laissant subsister un espace axial entre une extrémité libre de ladite partie en saillie (22, 24 ; 32, 34) et l'une de l'extrémité amont (15) du cadre aval (13b) de la structure fixe (12) ou l'autre du bord d'extrémité aval (14a) de la porte (14).

2. Inverseur de poussée (10) selon la revendication 1, dans lequel le groupe déflecteur de l'organe (20 ; 30) de déviation des fluides vers l'extérieur de l'inverseur de poussée (10) comprend au moins une première partie en saillie (22 ; 32) fixée sur le bord d'extrémité aval (14a) de la porte (14) et s'étendant localement dans le jeu axial (J) et vers l'extrémité amont (15) du cadre aval (13b) de la structure fixe (12) et au moins une deuxième partie en saillie (24 ; 34) fixée sur l'extrémité amont (15) du cadre aval (13b) de la structure fixe (12) et s'étendant localement dans le jeu axial (J) et vers le bord d'extrémité aval (14a) de la porte (14).

3. Inverseur de poussée (10) selon la revendication 2, dans lequel la première partie en saillie (32) et la deuxième partie en saillie (34) du groupe déflecteur de l'organe (30) de déviation des fluides externes sont en contact local direct radial et/ou circonférentiel l'une avec l'autre.

4. Inverseur de poussée (10) selon la revendication 3, dans lequel l'une de la première partie (32) ou l'autre de la deuxième partie (34) est réalisée en matériau élastique capable d'être déformé élastiquement lors d'une sollicitation externe et de reprendre sa forme initiale après l'arrêt de la sollicitation externe.

5. Inverseur de poussée (10) selon la revendication 4, dans lequel l'une de la première partie (32) ou l'autre de la deuxième partie (34) est un joint réalisé en matériau plus souple que l'une de la deuxième partie ou l'autre de la première partie.

6. Inverseur de poussée (10) selon la revendication 2, dans lequel, la première partie en saillie (22) et la deuxième partie en saillie (24) sont circonférentiellement espacées l'une de l'autre d'un jeu circonférentiel.

7. Inverseur de poussée (10) selon la revendication 6, dans lequel, la première partie en saillie (22) comprend une partie de fixation (22a) fixée sur le bord d'extrémité aval (14a) de la porte (14) et une partie de déviation (22b) s'étendant depuis une surface externe de la partie de fixation (22a) vers l'extérieur.

8. Inverseur de poussée (10) selon la revendication 6 ou 7, dans lequel, la deuxième partie (24) comprend une partie de fixation (24a) fixée sur l'extrémité amont du cadre aval (13b) de la structure fixe (12) et une partie de déviation (24b) s'étendant depuis une surface externe de la partie de fixation (24a) vers l'extérieur.

9. Inverseur de poussée (10) selon l'une quelconque des revendications précédentes, dans lequel le groupe déflecteur de l'organe (20) de déviation des fluides associé à la porte (14) comprend un nombre de premières parties en saillie (22) supérieur ou égal à deux et un nombre de deuxièmes parties en saillie (22) supérieur ou égal à deux, le nombre de premières parties en saillie (22) étant différent du nombre de deuxièmes parties en saillie (24).

10. Inverseur de poussée (10) selon l'une quelconque des revendications précédentes, dans lequel l'organe (20 ; 30) de déviation des fluides comprend au moins deux groupes déflecteur espacés circonférentiellement l'un de l'autre.

11. Inverseur de poussée (10) selon la revendication 2 et l'une quelconque des revendications précédentes, comprenant un premier organe (20) de déviation des fluides associé à la porte (14) et comprenant au moins un premier groupe déflecteur comprenant la première partie en saillie (22) et la deuxième partie en saillie (24) circonférentiellement espacée de la première partie en saillie (22) d'un jeu circonférentiel et un deuxième organe (30) de déviation des fluides associé à ladite porte (14) et comprenant au moins un deuxième groupe déflecteur comprenant la première partie en saillie (32) et la deuxième partie en saillie (34) en contact local direct radial et/ou circonférentiel avec la première partie en saillie (32).

12. Nacelle de turboréacteur d'aéronef comprenant un inverseur de poussée (10) à porte selon l'une quelconque des revendications précédentes.

## Patentansprüche

1. Schubumkehrvorrichtung (10) für eine Flugzeugtriebwerksgondel, die sich um eine Längsachse (A) erstreckt und eine feste Struktur (12) und mindestens eine Klappe (14) umfasst, die drehbeweglich ist zwischen einer geschlossenen Position, in der die Klappe (14) eine aerodynamische Kontinuität mit der festen Struktur (12) für die Zirkulation eines Luftstroms gewährleistet, und einer offenen Position, in der der zirkulierende Luftstrom zur Außenseite und zur stromaufwärtigen Seite der Schubumkehrvorrichtung (10) abgelenkt wird, wobei die feste Struktur (12) einen stromabwärtigen Rahmen (13b) umfasst, der ein stromaufwärtiges Ende (15) umfasst, das axial von einer stromabwärtigen Endkante (14a) der Klappe (14) durch ein zur Längsachse (A) paralleles axiales Spiel (J) beabstandet ist, wobei die Schubumkehrvorrichtung mindestens ein Organ (20; 30) zum Ablenken der Fluide zur Außenseite der Schubumkehrvorrichtung (10) umfasst, das der Klappe (14) zugeordnet ist, **dadurch gekennzeichnet, dass** das Organ (20; 30) zum Ablenken der Fluide mindestens eine Deflektorgruppe umfasst, die mindestens einen vorspringenden Teil (22, 24; 32, 34) umfasst, der an einer der Klappe (14) oder der festen Struktur (12) befestigt ist und sich lokal von einem der stromabwärtigen Endkante (14a) der Klappe (14) oder des stromaufwärtigen Endes (15) des stromabwärtigen Rahmens (13b) in das axiale Spiel (J) und zu einem des stromaufwärtigen Endes (15) des stromabwärtigen Rahmens (13b) oder der stromabwärtigen Endkante (14a) der Klappe (14) erstreckt, während er zugleich einen axialen Raum zwischen einem freien Ende des vorspringenden Teils (22, 24; 32, 34) und einem des stromaufwärtigen Endes (15) des stromabwärtigen Rahmens (13b) der festen Struktur (12) oder der stromabwärtigen Endkante (14a) der Klappe (14) bestehen lässt.

2. Schubumkehrvorrichtung (10) nach Anspruch 1, wobei die Deflektorgruppe des Organs (20; 30) zum Ablenken der Fluide zur Außenseite der Schubumkehrvorrichtung (10) mindestens einen ersten vorspringenden Teil (22; 32), der an der stromabwärtigen Endkante (14a) der Klappe (14) befestigt ist und sich lokal in das axiale Spiel (J) und zum stromaufwärtigen Ende (15) des stromabwärtigen Rahmens (13b) der festen Struktur (12) erstreckt, und mindestens einen zweiten vorspringenden Teil (24; 34) umfasst, der am stromaufwärtigen Ende (15) des stromabwärtigen Rahmens (13b) der festen Struktur (12) befestigt ist und sich lokal in das axiale Spiel (J) und zur stromabwärtigen Endkante (14a) der Klappe (14) erstreckt.

3. Schubumkehrvorrichtung (10) nach Anspruch 2, wobei der erste vorspringende Teil (32) und der zweite vorspringende Teil (34) der Deflektorgruppe des Organs (30) zum Ablenken der äußeren Fluide in direktem lokalem Radial- und/oder Umfangskontakt miteinander stehen.

4. Schubumkehrvorrichtung (10) nach Anspruch 3, wobei einer des ersten Teils (32) oder des zweiten Teils (34) aus elastischen Material hergestellt ist, das in der Lage ist, bei einer äußeren Beanspruchung elastisch verformt zu werden und nach Ende der äußeren Beanspruchung wieder seine ursprüngliche Form anzunehmen.

5. Schubumkehrvorrichtung (10) nach Anspruch 4, wobei einer des ersten Teils (32) oder des zweiten Teils (34) eine Dichtung ist, die aus Material hergestellt ist, das weicher ist als einer des zweiten Teils oder des ersten Teils.

6. Schubumkehrvorrichtung (10) nach Anspruch 2, wobei der erste vorspringende Teil (22) und der zweite vorspringende Teil (24) in Umfangsrichtung um ein Umfangsspiel voneinander beabstandet sind.

7. Schubumkehrvorrichtung (10) nach Anspruch 6, wobei der erste vorspringende Teil (22) einen Befestigungsteil (22a), der an der stromabwärtigen Endkante (14a) der Klappe (14) befestigt ist, und einen Ablenkteil (22b) umfasst, der sich von einer äußeren Fläche des Befestigungsteils (22a) zur Außenseite erstreckt.

8. Schubumkehrvorrichtung (10) nach Anspruch 6 oder 7, wobei der zweite Teil (24) einen Befestigungsteil (24a), der am stromaufwärtigen Ende des stromabwärtigen Rahmens (13b) der festen Struktur (12) befestigt ist, und einen Ablenkteil (24b) umfasst, der sich von einer äußeren Fläche des Befestigungsteils (24a) zur Außenseite erstreckt.

9. Schubumkehrvorrichtung (10) nach einem der vorstehenden Ansprüche, wobei die Deflektorgruppe des Organs (20) zum Ablenken der Fluide, das der Klappe (14) zugeordnet ist, eine Anzahl von ersten vorspringenden Teilen (22), die größer oder gleich zwei ist, und eine Anzahl von zweiten vorspringenden Teilen (22) umfasst, die größer oder gleich zwei ist, wobei sich die Anzahl der ersten vorspringenden Teile (22) von der Anzahl der zweiten vorspringenden Teile (24) unterscheidet.

10. Schubumkehrvorrichtung (10) nach einem der vorstehenden Ansprüche, wobei das Organ (20; 30) zum Ablenken der Fluide mindestens zwei Deflektorgruppen umfasst, die in Umfangsrichtung voneinander beabstandet sind.

11. Schubumkehrvorrichtung (10) nach Anspruch 2 und einem der vorstehenden Ansprüche, die ein erstes Organ (20) zum Ablenken der Fluide, das der Klappe (14) zugeordnet ist und mindestens eine erste Deflektorgruppe umfasst, die den ersten vorspringenden Teil (22) und den zweiten vorspringenden Teil (24) umfasst, der in Umfangsrichtung vom ersten vorspringenden Teil (22) um ein Umfangsspiel beabstandet ist, und ein zweites Organ (30) zum Ablenken der Fluide umfasst, das der Klappe (14) zugeordnet ist und mindestens eine zweite Deflektorgruppe umfasst, die den ersten vorspringenden Teil (32) und den zweiten vorspringenden Teil (34) umfasst, der in direktem lokalem Radial- und/oder Umfangskontakt mit dem ersten vorspringenden Teil (32) steht.

12. Flugzeugtriebwerksgondel, die eine Schubumkehrvorrichtung (10) mit Klappe nach einem der vorstehenden Ansprüche umfasst.

## Claims

1. Thrust reverser (10) of a nacelle of a turbojet engine of an aircraft extending about a longitudinal axis (A) and comprising a fixed structure (12) and at least one door (14) rotatable between a closed position in which said door (14) provides aerodynamic continuity with the fixed structure (12) for the circulation of an air flow and an open position in which the circulating air flow is diverted to the exterior and upstream of the thrust reverser (10), the fixed structure (12) comprising a downstream frame (13b) comprising an upstream end (15) spaced axially from a downstream end edge (14a) of the door (14) by an axial clearance (J) parallel to the longitudinal axis (A), the thrust reverser comprising at least one system (20; 30) for diverting fluids to the exterior of the thrust reverser (10) associated with the door (14) **characterised in that** the fluid diverter system (20; 30) comprises at least one deflector group comprising at least one projection (22, 24; 32, 34) fixed onto one of the door (14) or the fixed structure (12) and extending locally from one of downstream end edge (14a) of the door (14) or the upstream end (15) of the downstream frame (13b) in the axial clearance (J) and towards one of the upstream end (15) of the downstream frame (13b) or the downstream end edge (14a) of the door (14), while leaving an axial gap between a free end of said projection (22, 24; 32, 34) and one of the upstream end (15) of the downstream frame (13b) of the fixed structure (12) or the downstream end edge (14a) of the door (14).

2. Thrust reverser (10) according to claim 1, wherein the deflector group of the system (20; 30) for diverting fluids to the exterior of the thrust reverser (10) comprises at least one first projection (22; 32) fixed to the downstream end edge (14a) of the door (14) and extending locally into the axial clearance (J) and towards the upstream end (15) of the downstream frame (13b) of the fixed structure (12) and at least one second projection (24; 34) fixed to the upstream end (15) of the downstream frame (13b) of the fixed structure (12) and extending locally into the axial clearance (J) and towards the downstream end edge (14a) of the door (14).

3. Thrust reverser (10) according to claim 2, wherein the first projection (32) and the second projection (34) of the deflector group of the system (30) for diverting external fluids are in local direct radial and/or circumferential contact with one another.

4. Thrust reverser (10) according to claim 3, wherein one of the first portion (32) or the second portion (34) is made from an elastic material capable of being deformed elastically on application of external stress and being restored to its initial form once the external stress has stopped.

5. Thrust reverser (10) according to claim 4, wherein one of the first portion (32) or the second portion (34) is a seal made from a material that is more flexible than one of the second portion or the first portion.

6. Thrust reverser (10) according to claim 2, wherein the first projection (22) and the second projection (24) are spaced apart circumferentially from one another by a circumferential clearance.

7. Thrust reverser (10) according to claim 6, wherein, the first projection (22) comprises an attachment portion (22a) fixed to the downstream end edge (14a) of the door (14) and a diverting portion (22b) extending from an outer surface of the attachment portion (22a) to the exterior.

8. Thrust reverser (10) according to claim 6 or 7, wherein, the second portion (24) comprises an attachment portion (24a) fixed to the upstream end of the downstream frame (13b) of the fixed structure (12) and a diverting portion (24b) extending from an outer surface of the attachment portion (24a) to the exterior.

9. Thrust reverser (10) according to any of the preceding claims, wherein the deflector group of the fluid diverter system (20) associated with the door (14) comprises a number of first projections (22) greater than or equal to two and a number of second projections (22) greater than or equal to two, the number of first projections (22) being different from the number of second projections (24).

10. Thrust reverser (10) according to any of the preceding claims, wherein the system (20; 30) for diverting fluids comprises at least two deflector groups circumferentially spaced apart from each other.

11. Thrust reverser (10) according to claim 2 and any of the preceding claims, comprising a first system (20) for diverting fluids associated with the door (14) and comprising at least one first deflector group comprising the first projection (22) and the second projection (24) spaced apart circumferentially from the first projection (22) by a circumferential clearance and a second system (30) for diverting fluids associated with said door (14) and comprising at least a second deflector group comprising the first projection (32) and the second projection (34) in local direct radial and/or circumferential contact with the first projection (32).

12. Nacelle of a turbojet engine of an aircraft comprising a thrust reverser (10) with a door according to any of the preceding claims
